# EUROPÄISCHE PATENTSCHRIFT

(11) **EP 3 523 562 B1**
(45) Veröffentlichungstag und Bekanntmachung des Hinweises auf die Patenterteilung: **03.03.2021**
(21) Anmeldenummer: 17769075.7
(22) Anmeldetag: 20.09.2017
(51) Int. Cl.: F16L 5/04, H02G 3/04, F16L 5/02, H02G 3/22

(54) **LEITUNGSDURCHFÜHRUNG ZUM DURCHFÜHREN EINER LEITUNG DURCH EIN GEBÄUDEBAUTEIL**
PASSAGE OF A CONDUIT THROUGH A BUILDING SECTION
PASSAGE DE CONDUITE À TRAVERS UNE PARTIE DE BÂTIMENT

(30) Priorität: 05.10.2016 EP 16192338
(43) Veröffentlichungstag der Anmeldung: 14.08.2019
(73) Patentinhaber: Hilti Aktiengesellschaft, 9494 Schaan (LI)
(72) Erfinder: SIMON, Sebastian, 86807 Buchloe Lindenberg (DE); THIEMANN, Frank, 86899 Landsberg/Lech (DE)
(74) Vertreter: Hilti Aktiengesellschaft Corporate Intellectual Property
(86) Internationale Anmeldenummer: PCT/EP2017/073715
(87) Internationale Veröffentlichungsnummer: WO 2018/065212

(56) Entgegenhaltungen:
- EP-A1- 2 881 638
- DE-A1- 2 942 333
- DE-A1- 10 200 970
- DE-B- 1 249 023

## Beschreibung

### Technisches Gebiet

Die Erfindung betrifft Vorrichtungen zum Durchführen von Leitungen durch Gebäudebauteile, wie z.B. Gebäudewände und dergleichen, und Maßnahmen, um einen Durchtritt von Brandgasen und Rauch durch eine solche Leitungsdurchführung zu verhindern.

### Technischer Hintergrund

Herkömmliche Leitungsdurchführungen durch Gebäudebauteile weisen in der Regel Maßnahmen auf, die das Durchdringen von Brandgasen und Rauch verhindern sollen. Diese Maßnahmen umfassen z.B. das Einbringen von Dichtungsmasse oder anderen Dichtungsmaterialien. Dadurch wird jedoch häufig keine ausreichende Dichtigkeit gegen das Durchdringen von Brandgasen und Rauch erreicht.

Aus der Druckschrift US8869475 B2 ist eine Leitungsdurchführung für ein Bauelement bekannt, das zum Bereitstellen einer Dichtigkeit gegenüber Brandgasen und Rauch einen Lamellenvorhang aus schlaufenförmigen Lamellen aufweist, die sich an eine durchgeführte Leitung anlegen. Jedoch kann insbesondere bei Leitungen mit runden Querschnitten ein Vorhang aus derartigen Lamellen keine vollständige Dichtigkeit gegenüber dem Durchtritt von Brandgasen und Rauch gewährleisten.

Aus der Druckschrift DE 20 2007 017 899 U1 ist eine Vorrichtung zum Durchführen einer Leitung durch eine Öffnung in einer Wand bekannt, in der verformbare Lamellen angeordnet sind, die sich in radialer Richtung in Richtung einer Mittenachse der Leitungsdurchführung erstrecken. Eine derartige Leitungsdurchführung hat jedoch den Nachteil, dass diese nur bei einer hindurchgeführten Leitung abgedichtet werden kann und bei einer Bewegung der Leitung quer zur Längsachse der Leitungsdurchführung eine Dichtigkeit nicht mehr gewährleistet ist.

Aus der Druckschrift WO 2015/023313 ist eine Leitungsdurchführung bekannt, bei der zwei geneigte Paneele an quer verlaufenden Stegen aus elastomerem Material anliegen, wobei eine hindurchgeführte Leitung zwischen den Paneelen und dem elastomeren Steg aufgenommen wird. Die Flexibilität der Stege dient zum Abdichten des Bereichs um die hindurchgeführte Leitung. Aufgrund der geradlinigen Anlagefläche der Paneele an dem elastomeren Steg kann jedoch eine vollständige Abdichtung bei einer hindurchgeführten Leitung nicht gewährleistet werden.

Schließlich offenbart DE 12 49 023 B die Merkmale des Oberbegriffs von Anspruch 1.

Es ist Aufgabe der vorliegenden Erfindung, eine verbesserte Leitungsdurchführung zur Durchführung einer Leitung durch ein Gebäudebauelement zur Verfügung zu stellen, bei dem eine Dichtigkeit gegenüber Brandgasen und Rauch auch bei einer Bewegung der Leitung innerhalb der Durchführung gewährleistet ist.

### Offenbarung der Erfindung

Diese Aufgabe wird durch die Leitungsdurchführung gemäß Anspruch 1 sowie durch die Anordnung gemäß dem nebengeordneten Anspruch 7 und die Verwendung gemäß Anspruch 9 gelöst.

Weitere Ausgestaltungen sind in den abhängigen Ansprüchen angegeben.

Gemäß einem ersten Aspekt ist eine Leitungsdurchführung zur Durchführung einer Leitung durch ein Gebäudebauteil mit einer oder mehreren Dichtungsanordnungen vorgesehen, wobei die eine oder die mehreren Dichtungsanordnungen mindestens zwei einander gegenüberliegenden Dichtungsstrukturen aufweisen, wobei mindestens eine erste der Dichtungsstrukturen eine Anordnung aus zueinander benachbarten länglichen Lamellen aufweist, deren abstehenden Enden an einer zweiten der Dichtungsstrukturen anliegen und so den Durchlassbereich abdichten.

Eine Idee der obigen Leitungsdurchführung besteht darin, die Abdichtung einer hindurchgeführten Leitung durch eine Dichtungsanordnung vorzusehen, die mindestens zwei einander gegenüberliegende elastisch verformbare Dichtungsstrukturen aufweist. Die Dichtungsstrukturen liegen an einem Durchlassbereich aneinander an, durch den die hindurchgeführte Leitung nach der Montage verläuft. Im Bereich der hindurchgeführten Leitung verformen sich die Dichtungsstrukturen beidseitig und liegen an einer Mantelfläche der hindurchgeführten Leitung an und dichten diese gegen einen Durchtritt von Brandgasen und Rauch in axiale Richtung ab.

Durch das Vorsehen von mindestens zwei einander gegenüberliegenden Dichtungsstrukturen kann eine hindurchgeführte Leitung unabhängig von ihrem Querschnitt vollständig abgedichtet werden.

Durch die elastische Ausbildung der Dichtungsstrukturen ist zudem auch eine Verschiebung der Leitung entlang des Durchlassbereiches möglich, ohne dass es zu einer Undichtigkeit kommt, da sich das flexible Material der Dichtungsstrukturen an eine veränderte Position der Leitung anpassen kann. Auch ermöglicht die obige Dichtungsanordnung das Hindurchführen von mehreren Leitungen, ohne dass es zu einer Beeinträchtigung der Dichtungswirkung kommt.

Weiterhin weisen die erste und die zweite Dichtungsstruktur der Dichtungsanordnung jeweils eine Anordnung aus zueinander benachbarten länglichen Lamellen auf, deren abstehenden Enden aneinander anliegen.

Erfindungsgemäß variiren die Längen der benachbarten Lamellen der ersten und der zweiten Dichtungsstruktur jeweils, wobei die Lamellen der ersten und der zweiten Dichtungsstruktur kammartig ineinandergreifen.

Alternativ kann vorgesehen sein, dass die zweite Dichtungsstruktur ein flexibles Dichtungselement aus einem elastischen Material, insbesondere einem Schaummaterial, mit einer Anlagefläche aufweist, an der die abstehenden Enden der Lamellen der ersten Dichtungsstruktur anliegen.

Insbesondere kann das elastisch verformbare Material des Dichtungselements und das elastischen Material der Lamellen und deren geometrische Dimensionierung so gewählt sein, dass bei Hindurchführen der Leitung diese etwa zur Hälfte ihres Querschnitts in das elastisch verformbare Material der des Dichtungselements hineingedrückt wird.

Weiterhin können die erste und/oder die zweite Dichtungsstruktur ein intumeszierendes Material enthalten.

Es kann vorgesehen sein, dass zumindest die erste Dichtungsstruktur flexible Borsten als Lamellen aufweist, wobei die Borsten in mehreren Reihen angeordnet sind, um eine Bürstenstruktur auszubilden, wobei insbesondere sich die Borsten von benachbarten Reihen einander berühren.

Gemäß einer Ausführungsform können die Lamellen zumindest der ersten Dichtungsstruktur in Erstreckungsrichtung hin zum abstehenden Enden eine abnehmende Steifheit aufweisen.

Gemäß einem weiteren Aspekt ist eine Leitungsanordnung mit der obigen Leitungsdurchführung und einer hindurchgeführten Leitung vorgesehen, wobei die Leitung in dem Durchlassbereich zwischen der ersten und zweiten Dichtungsstruktur aufgenommen ist, so dass sowohl die erste als auch die zweite Dichtungsstruktur verformt ist.

Weiterhin können zumindest die Lamellen der ersten Dichtungsstruktur eine Breite in Anordnungsrichtung aufweisen, die kleiner ist als die Breite der hindurchgeführten Leitung, wobei insbesondere die Breite der hindurchgeführten Leitung um das 5-fache, vorzugsweise um das 10-fache größer ist als die Breite der Lamellen.

### Kurzbeschreibung der Zeichnungen

Ausführungsformen werden nachfolgend anhand der beigefügten Zeichnungen näher erläutert. Es zeigen:
- Figur 1: eine perspektivische Darstellung einer nicht erfindungsgemäßen Leitungsdurchführung für ein Gebäudebauelement;
- Figur 2: eine Draufsicht einer Dichtungsanordnung in der nicht erfindungsgemäßen Leitungsdurchführung der Figur 1;
- Figur 3: eine Querschnittsdarstellung einer weiteren nicht erfindungsgemäßen Dichtungsanordnung;
- Figur 4: eine Draufsicht einer Dichtungsanordnung in der Leitungsdurchführung gemäß einer weiteren Ausführungsform; und
- Figur 5: eine Draufsicht einer nicht erfindungsgemäßen Dichtungsanordnung in der Leitungsdurchführung gemäß einer weiteren Ausführungsform.

### Beschreibung von Ausführungsformen

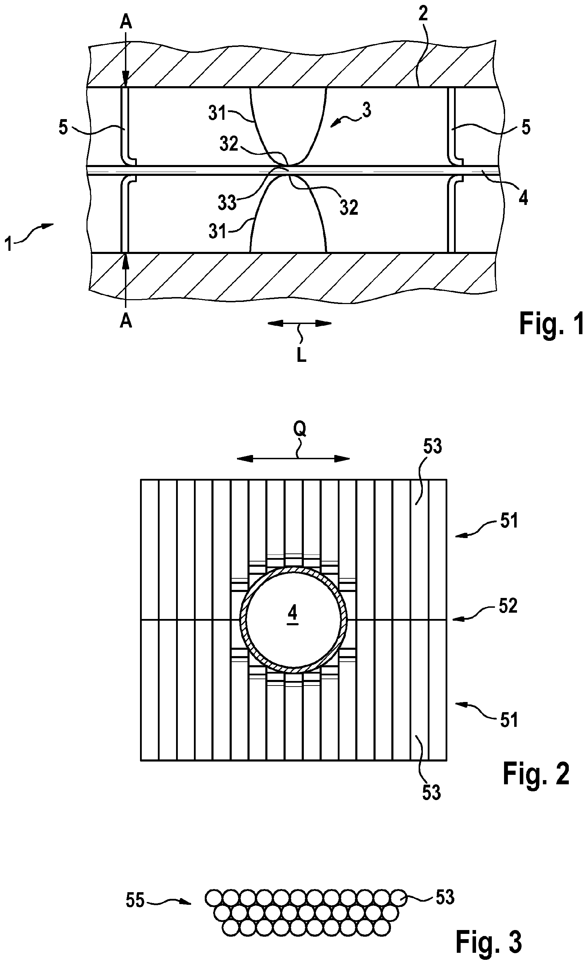

Figur 1 zeigt eine Querschnittsdarstellung durch eine Leitungsdurchführung 1. Die Leitungsdurchführung 1 dient zum Durchführen einer oder mehrerer Leitungen 4, wie beispielsweise Stromleitungen, Wasserleitungen, Gasleitungen und dergleichen, durch ein Gebäudebauteil, wie z.B. eine Gebäudewand, eine Decke und einen Boden.

Dazu weist die Leitungsdurchführung 1 ein Durchführungselement 2 auf, das im Wesentlichen eine hohlzylindrische Ausbildung hat und so eine Durchgangsöffnung zum Hindurchführen der Leitungen 4 entlang einer Längsrichtung L der Durchgangsöffnung ausbildet. Der Querschnitt des Durchführungselements 2 kann kreisförmig oder rechteckig sein.

In dem Durchführungselement 2 ist eine Halteeinrichtung 3 angeordnet, die insbesondere in einem Mittenbereich (bezüglich Längsrichtung L der Durchgangsöffnung) des Durchführungselements 2 angeordnet sein kann. Die Halteeinrichtung 3 dient zum Beaufschlagen der hindurchgeführten Leitung 4 mit einer Haltekraft, die quer zur Längsrichtung der hindurchgeführten Leitung 4 wirkt, so dass diese bezüglich einer axialen Verschiebung reibschlüssig gehalten wird. Die Halteeinrichtung 3 weist zwei einander zugewandte flexible Halteelemente 31 auf, die sich durch die Dicke einer durchgeführten Leitung 4 verformen und eine Kraft quer zur Längsrichtung L auf die hindurchgeführte Leitung 4 ausüben, die die Leitung 4 gegen ein Verrutschen halten. Die Halteelemente 31 weisen jeweils eine längliche Haltekante 32 auf und definieren so einen sich in Querrichtung Q quer zur Längsrichtung L erstreckenden Haltebereich 33.

Weiterhin sind Dichtungsanordnungen 5 in Längsrichtung L zur Halteeinrichtung 3 versetzt angeordnet, um ein Durchdringen von Brandgasen und Rauch durch das Durchführungselement 2 zu verhindern.

In Verbindung mit Figur 2, die eine Querschnittsdarstellung entlang der Schnittlinie A-A zeigt, wird ein möglicher Aufbau der Dichtungsanordnung 5 näher darstellt. Die Dichtungsanordnung 5 weist zwei einander gegenüberliegende Dichtungsstrukturen 51 auf. Die Dichtungsstrukturen 51 sind an zwei gegenüberliegenden Bereichen der Innenwand des Durchführungselements 2 in eine Querrichtung Q verlaufend angeordnet. In der gezeigten Ausführungsform weisen die Dichtungsstrukturen 51 einander unmittelbar benachbarte elastische Lamellen 53 auf, deren jeweils erstes Ende an der betreffenden Innenwand des Durchführungselements 2 befestigt ist, so dass sich die Lamellen 53 ins Innere der Durchführungselemente 2 erstrecken. Die jeweiligen zweiten Enden der Lamellen 53 befinden sich in einem Durchlassbereich 52.

Die Lamellen 53 weisen jeweils Längen auf, so dass diese mit oder im Bereich ihrer zweiten Enden jeweils aneinander anliegen und so einen Durchtritt von Brandgasen und Rauch durch den Durchlassbereich 52 verhindern.

In einem Abschnitt des Durchlassbereichs 52, in dem die Leitung 4 durch die Dichtungsanordnung 5 geführt wird, werden die Lamellen 53 im Bereich ihrer zweiten Enden in Längsrichtung L umgebogen und liegen so an der Mantelfläche der Leitung 4 an und dichten diese gegen Durchtritt von Brandgasen und Rauch ab. Um eine zuverlässige Abdichtung zu erreichen, sollte die Breite der Lamellen 53 in Querrichtung Q deutlich kleiner sein als der Durchmesser (oder die Abmessung in Querrichtung) der Leitung 4, insbesondere sollte die Breite der Lamellen 53 in Querrichtung um den Faktor 5, vorzugsweise um den Faktor 10, kleiner sein als der Durchmesser (oder die Abmessung in Querrichtung) der Leitung 4. Die Dicke der Lamellen 53 in Längsrichtung kann zwischen 0,5 mm und 5mm, vorzugsweise zwischen 1mm und 3 mmm betragen. Die Dichtungsstrukturen 51 können mehrere unmittelbar in Längsrichtung L hintereinander angeordnete Anordnungen von Lamellen 53 umfassen.

Die Lamellen 53 können einen rechteckigen Querschnitt aufweisen, so dass benachbarte Lamellen 53 mit ihren Seitenflächen aneinander anliegen, um eine Dichtigkeit auch bezüglich eines Durchtritts zwischen den Lamellen 53 zu erreichen.

Alternativ können die Lamellen 53 auch als Borsten mit runden Querschnitten ausgebildet sein und mehrere Lagen in Längsrichtung L aufweisen, um so eine Bürstenstruktur 55 auszubilden. Die Borsten der Bürstenstruktur 55 liegen dabei vorzugsweise aneinander an, um so eine ausreichende Dichtigkeit gegenüber dem Durchtritt von Brandgasen und Rauch zu gewährleisten. Insbesondere können die Borsten der Bürstenstruktur 55 mit einer möglichst hohen Packungsdichte aneinander anliegen, so dass eine Anordnung, wie sie beispielsweise in Figur 3 dargestellt ist, in einer Querschnittsansicht bezüglich der Erstreckungsrichtung der Borsten vorgesehen ist. Dabei sind mehrere parallele Reihen einander sich berührender Borsten jeweils um einen Radius der Borsten zueinander versetzt angeordnet, wobei die Borsten von benachbarten Reihen ebenfalls aneinander anliegen.

Die Lamellen 53 bzw. die Borsten sind vorzugsweise aus einem elastischen Kunststoffmaterial ausgebildet. Weiterhin können auch Gewebe, Gelege oder Papiermaterialien vorgesehen sein, die flexibel sind sich gut an der Mantelfläche der Leitung 4 anlegen können und möglichst eine elastische Kraft auf die Mantelfläche ausüben, um einen möglichst dichten Verschluss im Bereich um die Mantelfläche der Leitung zu gewährleisten. Die Lamellen 53 können weiterhin ein intumeszierendes Material aufweisen, wie z.B. mit einem intumeszierenden Material beschichtet sein oder ein intumeszierendes Material umschließen, und insbesondere aus einem mit intumeszierendem Material versehenes Papier umfassen.

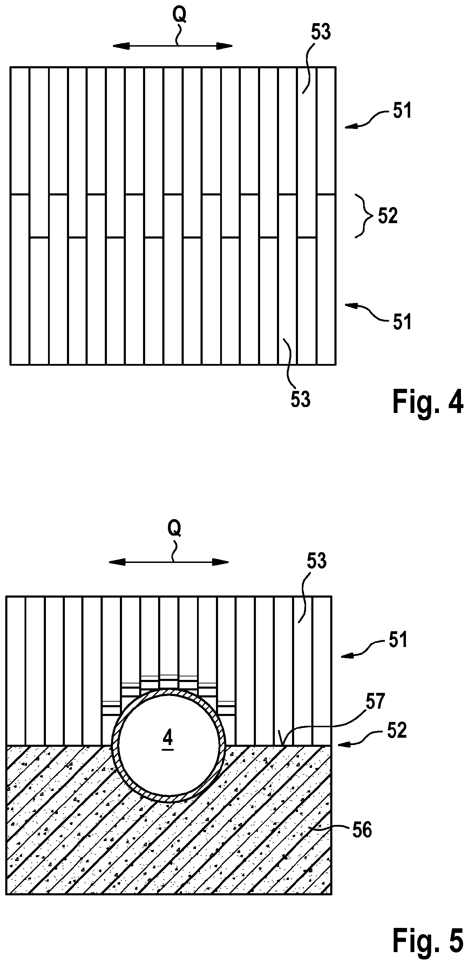

Wie in Figur 4 gezeigt, weisen die Lamellenanordnungen 51 auch Lamellen 53 unterschiedlicher Länge auf, so dass zweite Enden von jeweils einander gegenüberliegende Lamellen 53 an Stellen aneinander anliegen, die entlang der der Querrichtung Q in einer Erstreckungsrichtung E der Lamellen 53 versetzt sind. Dadurch ergibt sich ein verbreiterter Durchlassbereich 52 Dies ermöglicht ein verbessertes Anliegen an der durchgeführten Leitung 4.

Figur 5 zeigt eine Querschnittsdarstellung durch eine Dichtungsanordnung 5 gemäß einer weiteren Ausführungsform, wobei verschiedene Dichtungsstrukturen vorgesehen sind. Eine erste Dichtungsstruktur 51 ist wie oben beschrieben aufgebaut und weist entsprechend eine Lamellenanordnung aus einander benachbarten Lamellen 53 auf, die sich in Querrichtung Q des Durchlassbereichs 52 erstrecken. Die zweiten Enden der Lamellen 53 liegen an einer zweiten Dichtungsstruktur 56 an, die ein durchgehendes flexibles Dichtungselement, mit einer sich in Querrichtung Q erstreckenden Anlagefläche 57 aufweist. Der Durchlassbereich 52 wird durch das Anliegen der zweiten Enden der Lamellen 53 an der Anlagefläche 57 des durchgehenden Dichtungselements der zweiten Dichtungsstruktur 56 gebildet.

Die zweite Dichtungsstruktur 56 ist aus einem elastisch verformbaren Material gebildet, wie beispielsweise ein Schaumstoff oder dergleichen, das insbesondere ein intumeszierendes Material aufweist. Das elastisch verformbare Material des durchgehenden Dichtungselements und das elastischen Material der Lamellen und deren geometrische Dimensionierung sind so gewählt, dass bei Hindurchführen der Leitung 4 diese etwa zur Hälfte ihres Querschnitts in das elastisch verformbare Material der zweiten Dichtungsstruktur 56 hineingedrückt wird und diese dadurch verformt.

Beim Hindurchführen einer Leitung 4 verformt ein Teil der Leitung 4 das elastisch verformbare durchgehende Dichtungselement 56, während der aus der zweiten Dichtungsstruktur 56 herausragende Teil des Leitungsquerschnitts von den Lamellen 53 so umgibt, dass diese mit ihren zweiten Enden an der Mantelfläche der Leitung 4 anliegen. So kann eine Abdichtung gegenüber Brandgasen und Rauch erreicht werden, da jeder Teil der Mantelfläche in Kontakt mit einer Dichtungsstruktur 51 ist.

Um eine verbesserte Abdichtung der mit Lamellen 53 ausgebildeten Dichtungsstrukturen 51 zu erreichen, können die Lamellen der ersten Dichtungsstruktur 51 mit sich ändernder Elastizität ausgebildet sein, so dass an deren Befestigung an dem Durchführungselement 2 das Material der Lamellen 53 eine geringere Elastizität aufweist als an deren zweiten Enden. Mit anderen Worten nimmt die Steifigkeit der Lamellen 53 in Richtung deren zweiten Enden ab. Somit verformt eine hindurchgeführte Leitung 4 die Lamellen 53 im Wesentlichen unmittelbar an deren Mantelfläche, wobei der umgebogene Abschnitt der Lamellen 53 sich dann an die Mantelfläche in Längsrichtung L anlegt. Dies ermöglicht eine besonders gute Abdichtung gegenüber Brandgasen und Rauch.

## Patentansprüche

1. Leitungsdurchführung (1) zur Durchführung einer Leitung (4) durch ein Gebäudebauteil mit einer oder mehreren Dichtungsanordnungen (2) zum Durchführen der Leitung (4), wobei die eine oder die mehreren Dichtungsanordnungen (2) mindestens zwei einander gegenüberliegenden Dichtungsstrukturen (51) aufweisen, wobei mindestens eine erste der Dichtungsstrukturen (51) eine Anordnung aus zueinander benachbarten länglichen Lamellen (53) aufweist, deren abstehenden Enden an einer zweiten der Dichtungsstrukturen (51) anliegen und so den Durchlassbereich abdichten, wobei die erste und die zweite Dichtungsstruktur (51) der Dichtungsanordnung (5) jeweils eine Anordnung aus zueinander benachbarten länglichen Lamellen (53) aufweisen, deren abstehenden Enden aneinander anliegen, **dadurch gekennzeichnet, dass** die Längen der benachbarten Lamellen (53) der ersten und der zweiten Dichtungsstruktur (51) jeweils variieren, so dass zweite Enden von jeweils einander gegenüberliegenden Lamellen (53) an Stellen aneinander anliegen, die entlang einer Querrichtung in einer Erstreckungsrichtung (E) der Lamellen (53) versetzt sind, wobei die Lamellen (53) der ersten und der zweiten Dichtungsstruktur (51) kammartig ineinandergreifen.

2. Leitungsdurchführung (1) nach Anspruch 1, wobei die zweite Dichtungsstruktur (51) ein flexibles Dichtungselement (56) aus einem elastischen Material, insbesondere einem Schaummaterial, mit einer Anlagefläche aufweist, an der die abstehenden Enden der Lamellen der ersten Dichtungsstruktur (51) anliegen.

3. Leitungsdurchführung (1) nach Anspruch 2, wobei das elastisch verformbare Material des Dichtungselements (56) und das elastischen Material der Lamellen (53) und deren geometrische Dimensionierung so gewählt sind, dass bei Hindurchführen der Leitung (4) diese etwa zur Hälfte ihres Querschnitts in das elastisch verformbare Material der des Dichtungselements (56) hineingedrückt wird.

4. Leitungsdurchführung (1) nach einem der Ansprüche 1 bis 3, wobei die erste und/oder die zweite Dichtungsstruktur (51) ein intumeszierendes Material enthalten.

5. Leitungsdurchführung (1) nach einem der Ansprüche 1 bis 4, wobei zumindest die erste Dichtungsstruktur (51) flexible Borsten als Lamellen (53) aufweist, wobei die Borsten in mehreren Reihen angeordnet sind, um eine Bürstenstruktur (55) auszubilden, wobei insbesondere sich die Borsten von benachbarten Reihen einander berühren.

6. Leitungsdurchführung (1) nach einem der Ansprüche 1 bis 5, wobei die Lamellen zumindest der ersten Dichtungsstruktur (51) in Erstreckungsrichtung hin zum abstehenden Enden eine abnehmende Steifheit aufweisen.

7. Leitungsanordnung mit einer Leitungsdurchführung (1) nach einem der Ansprüche 1 bis 6 und einer hindurchgeführten Leitung (4), wobei die Leitung (4) in dem Durchlassbereich zwischen der ersten und zweiten Dichtungsstruktur (51) aufgenommen ist, so dass sowohl die erste als auch die zweite Dichtungsstruktur (51) verformt ist.

8. Leitungsanordnung nach Anspruch 7, wobei zumindest die Lamellen (53) der ersten Dichtungsstruktur (51) eine Breite in Anordnungsrichtung aufweisen, die kleiner ist als die Breite der hindurchgeführten Leitung (4), wobei insbesondere die Breite der hindurchgeführten Leitung um das 5-fache, vorzugsweise um das 10-fache größer ist als die Breite der Lamellen.

9. Verwendung der Leitungsdurchführung nach einem der Ansprüche 1 bis 6 zur Abdichtung gegenüber Brandgasen und Rauch in einem Gebäudebauteil.

## Claims

1. Line feedthrough (1) for feeding a line (4) through a building component, comprising one or more sealing arrangements (2) for feeding the line (4) through, the one or more sealing arrangements (2) having at least two opposing sealing structures (51), at least a first of the sealing structures (51) having an arrangement of mutually adjacent elongate lamellae (53) of which the protruding ends abut a second of the sealing structures (51) and thus seal the passage region, the first and the second sealing structure (51) of the sealing arrangement (5) each having an arrangement of mutually adjacent elongate lamellae (53) of which the protruding ends abut one another, **characterized in that** the lengths of the adjacent lamellae (53) of the first and the second sealing structure (51) vary in each case such that second ends of opposing lamellae (53) abut one another at points which are offset along a transverse direction in an extension direction (E) of the lamellae (53), the lamellae (53) of the first and the second sealing structure (51) engaging with one another in a comb-like manner.

2. Line feedthrough (1) according to claim 1, wherein the second sealing structure (51) has a flexible sealing element (56) made of an elastic material, in particular a foam material, with a contact face abutted by the protruding ends of the lamellae of the first sealing structure (51).

3. Line feedthrough (1) according to claim 2, wherein the elastically deformable material of the sealing element (56) and the elastic material of the lamellae (53) as well as the geometric dimensioning thereof are selected such that when the line (4) is fed through it is forced by approximately half of its cross section into the elastically deformable material of the sealing element (56).

4. Line feedthrough (1) according to any of claims 1 to 3, wherein the first and/or the second sealing structure (51) contains an intumescent material.

5. Line feedthrough (1) according to any of claims 1 to 4, wherein at least the first sealing structure (51) has flexible bristles as lamellae (53), wherein the bristles are arranged in multiple rows in order to form a brush structure (55), wherein in particular the bristles of adjacent rows touch one another.

6. Line feedthrough (1) according to any of claims 1 to 5, wherein the lamellae of at least the first sealing structure (51) have a decreasing stiffness in the extension direction toward the protruding ends.

7. Line arrangement comprising a line feedthrough (1) according to any of claims 1 to 6 and a fed-through line (4), wherein the line (4) is received in the passage region between the first and the second sealing structure (51) such that both the first and the second sealing structure (51) are deformed.

8. Line feedthrough according to claim 7, wherein at least the lamellae (53) of the first sealing structure (51) have a width in the arrangement direction that is smaller than the width of the fed-through line (4), wherein in particular the width of the fed-through line is 5 times, preferably 10 times larger than the width of the lamellae.

9. Use of the line feedthrough according to any of claims 1 to 6 for sealing against fire gases and smoke in a building component.

## Revendications

1. Passage de câble (1) permettant de faire passer un câble (4) à travers un composant de bâtiment, comportant un ou plusieurs ensembles d'étanchéité (2) permettant de faire passer le câble (4), le ou les ensembles d'étanchéité (2) présentant au moins deux structures d'étanchéité (51) opposées l'une à l'autre, au moins une première structure d'étanchéité (51) présentant un ensemble de lamelles allongées (53) adjacentes les unes aux autres, dont les extrémités en saillie s'appliquent contre une seconde structure d'étanchéité (51) et étanchéifient ainsi la zone de passage, la première et la seconde structure d'étanchéité (51) de l'ensemble d'étanchéité (5) présentant respectivement un ensemble de lamelles allongées (53) adjacentes les unes aux autres, dont les extrémités en saillie s'appliquent les unes contre les autres, **caractérisé en ce que** les longueurs des lamelles adjacentes (53) des première et seconde structures d'étanchéité (51) varient respectivement de sorte que les secondes extrémités de lamelles (53) respectivement opposées les unes aux autres s'appliquent à des points qui sont décalés le long d'une direction transversale dans une direction d'extension (E) des lamelles (53), les lamelles (53) de la première et de la seconde structure d'étanchéité (51) venant en prise les unes avec les autres à la manière d'un peigne.

2. Passage de câble (1) selon la revendication 1, dans lequel la seconde structure d'étanchéité (51) présente un élément d'étanchéité souple (56) constitué d'un matériau élastique, en particulier d'un matériau en mousse, et comportant une surface de contact contre laquelle s'appliquent les extrémités en saillie des lamelles de la première structure d'étanchéité (51).

3. Passage de câble (1) selon la revendication 2, dans lequel le matériau élastiquement déformable de l'élément d'étanchéité (56) et le matériau élastique des lamelles (53) et leurs dimensions géométriques sont choisis de telle sorte que, lorsque le câble (4) y est passé, environ la moitié de sa section transversale est enfoncée dans le matériau élastiquement déformable de l'élément d'étanchéité (56).

4. Passage de câble (1) selon l'une des revendications 1 à 3, dans lequel la première et/ou la seconde structure d'étanchéité (51) contiennent un matériau intumescent.

5. Passage de câble (1) selon l'une des revendications 1 à 4, dans lequel au moins la première structure d'étanchéité (51) présente des poils souples en tant que lamelles (53), les poils étant disposés en plusieurs rangées pour former une structure de brosse (55), les poils de rangées adjacentes étant en particulier en contact.

6. Passage de câble (1) selon l'une des revendications 1 à 5, dans lequel les lamelles d'au moins la première structure d'étanchéité (51) présentent une rigidité décroissante dans la direction d'extension vers les extrémités saillantes.

7. Ensemble de câble comportant un passage de câble (1) selon l'une des revendications 1 à 6 et un câble (4) passé, le câble (4) étant reçu dans la zone de passage entre la première et la seconde structure d'étanchéité (51) de sorte qu'à la fois la première et la seconde structure d'étanchéité (51) sont déformées.

8. Ensemble de câble selon la revendication 7, dans lequel au moins les lamelles (53) de la première structure d'étanchéité (51) présentent une largeur dans la direction d'ensemble qui est inférieure à la largeur du câble (4) passé, la largeur du câble passé étant en particulier 5 fois, de préférence 10 fois plus grande que la largeur des lamelles.

9. Utilisation du passage de câble selon l'une des revendications 1 à 6 pour assurer l'étanchéité d'un composant de bâtiment contre les gaz de combustion et la fumée.
